# DEMANDE DE BREVET EUROPEEN

(11) **EP 0 901 767 A1**
(43) Date de publication de la demande: **17.03.1999**
(21) Numéro de dépôt: 98420155.8
(22) Date de dépôt: 10.09.1998
(51) Int. Cl.: A47J 37/08

(54) **Grille-pain à remontée ralentie**

(30) Priorité: 12.09.1997 FR 9711602
(71) Demandeur: SEB S.A., 69130 Ecully (FR)
(72) Inventeur: Mauffrey, Guy, 70280 Breuchotte (FR)

(57) **Abrégé**

- Grille-pain électrique, comportant un bâti pourvu d'un châssis, une fente d'introduction du pain, une chambre de cuisson, des éléments chauffants agencés au voisinage de la chambre de cuisson, un chariot porte-pain mobile, à l'intérieur de la chambre de cuisson, entre au moins une position de grillage et une position de repos, une tige de guidage (5) pour optimiser le déplacement du chariot, un moyen de blocage afin de positionner le chariot à un niveau inférieur correspondant à la position de grillage, un moyen de rappel du chariot monté sur le chariot et sur le bâti, un système susceptible de ralentir la remontée du chariot, caractérisé en ce que ce système est disposé sur une extension du chariot porte-pain, hors de la chambre de grillage et est constitué d'un ralentisseur (6) rotatif de type visqueux ou de type friction, activé lorsque le chariot est libéré et remonte de sa position de grillage vers une position de repos.

## Description

La présente demande se rapporte au domaine des appareils de cuisson de type grille-pain électrique, et plus particulièrement à un dispositif amélioré de ralentissement de la remontée du chariot porte-pain.

Une telle fonction sur un grille-pain est connue, par exemple par le document FR-2 035 965 où le ralentissement de la remontée du chariot porte-pain est obtenu par un volant d'inertie, entraîné en rotation par friction d'une roulette solidaire du volant, sur la colonne de guidage du chariot. Ce volant est monté sur un bras articulé qui s'arc-boute contre la colonne, créant ainsi l'adhérence nécessaire à la rotation de la roulette, lors de la remontée du chariot. A la descente, ce bras s'échappe, évitant ainsi l'usure inutile du mécanisme ainsi qu'un effort inopportun de l'utilisateur du grille-pain.

Ainsi, l'énergie stockée dans le dispositif de rappel du chariot, généralement un ressort, est transférée au volant d'inertie qui amortit donc le déplacement accéléré du grille-pain.

Un tel système présente l'inconvénient majeur de produire un mouvement accéléré du volant d'inertie qui, lorsque le chariot est revenu dans sa position de repos, après grillage du pain, continue à tourner, engendrant un bruit inutile ainsi qu'une contrainte mécanique entre la roulette et la colonne de guidage.

Par ailleurs, ce système reste peu efficace compte tenu du faible volume disponible pour la roue. De plus, des miettes de pain peuvent venir entraver la rotation du volant d'inertie et bloquer le système.

D'autres grille-pain disposent d'une remontée amortie du chariot, appelée "dashpot", soit à l'aide de ressorts d'amortissement, soit par des ensembles de type cylindre-piston à fuite d'air ou de type pignon-crémaillère. De tels systèmes restent peu efficaces sur toute la course du chariot, souvent peu fiables dans le temps et d'une réalisation complexe.

De plus, sur certains de ces modèles, l'amortissement est effectif dès le début de la remontée, ce qui peut être dangereux. En effet, le chariot porte-pain sert très souvent à établir le contact électrique déclenchant l'alimentation des résistances de chauffe. Il est donc nécessaire que ce chariot puisse remonter sur une certaine hauteur sans être freiné, afin d'assurer la coupure électrique du circuit de chauffage, dans le cas où le pain resterait, par exemple, collé à la surface des grilles de maintien.

Un des objectifs de la présente invention est de résoudre ces inconvénients de manière à réaliser un ralentissement de la remontée du chariot porte-pain silencieux, de caractéristique parfaitement reproductible et offrant les mêmes sécurités qu'un grille-pain dépourvu d'un tel dispositif.

Un autre objet de la présente invention vise à réaliser un tel système avec des éléments simples, afin de réduire le coût d'une telle fonction.

Les objets de la présente invention sont atteints à l'aide d'un grille-pain électrique, comportant un bâti pourvu d'un châssis, une fente d'introduction du pain, une chambre de cuisson, des éléments chauffants agencés au voisinage de la chambre de cuisson, un chariot porte-pain mobile, à l'intérieur de la chambre de cuisson, entre au moins une position de grillage et une position de repos, une tige de guidage pour optimiser le déplacement du chariot, un moyen de blocage afin de positionner le chariot à un niveau inférieur correspondant à la position de grillage, un moyen de rappel du chariot monté sur le chariot et sur le bâti, un système susceptible de ralentir la remontée du chariot, caractérisé en ce que ce système est disposé sur une extension du chariot porte-pain, hors de la chambre de grillage et est constitué d'un ralentisseur rotatif de type visqueux ou de type friction, activé lorsque le chariot est libéré et remonte de sa position de grillage vers une position de repos.

Selon l'invention, le ralentisseur est constitué d'un boîtier formé soit uniquement par des éléments solidaires d'une extension du chariot porte pain, soit en partie par lesdits éléments et par un élément susceptible d'être mis en rotation, le frottement de type visqueux ou de type friction se réalisant à l'intérieur du boîtier par un élément mis en rotation par rapport à un élément fixe solidaire du boîtier du système ralentisseur lorsque le chariot est libéré et remonte de sa position de grillage vers une position de repos.

Le ralentissement est ainsi protégé de l'environnement extérieur, notamment des poussières et miettes de pain par exemple qui peuvent venir bloquer le système, tout en permettant, selon l'une des variantes de réalisation, un frottement de type visqueux à l'intérieur du boîtier.

On connaît des ralentisseurs rotatifs à graisse, communément appelé "damper" qui sont des composants standard, comportant un disque pouvant tourner autour d'un axe, dans un environnement visqueux. Il sont couramment utilisés, notamment dans la construction mécanique de précision, où ils servent, par exemple, pour ralentir le mouvement d'une pièce afin de ne pas brusquer son fragile environnement.

De tels éléments peuvent être utilisés pour le ralentissement de la remontée du chariot porte-pain d'un grille-pain, en tenant compte des contraintes liées à la chaleur régnant autour de la chambre de cuisson ainsi que des forces de rappel mises en jeu.

La caractéristique principale de ce système de ralentissement de la remontée du chariot porte-pain à l'aide d'un ralentisseur à graisse est liée à la viscosité du fluide contenu dans le ralentisseur. Ce fluide est emprisonné dans une enceinte hermétique, ou boîtier, de sorte que les miettes de pain, générées lors de l'utilisation du grille-pain, ne peuvent venir perturber le fonctionnement de ce système.

De plus, il est possible d'utiliser un fluide de viscosité différente permettant, sur une gamme étendue, d'obtenir des ralentissements différents afin d'adapter ce système à tout type de grille-pain.

La réalisation de la fonction de ralentissement de la remontée du chariot porte-pain à l'aide d'un élément standard, aux caractéristiques ajustées, permet de diminuer sensiblement le prix de revient d'un grille-pain équipé d'une telle fonction.

Un des modes de réalisation de ce système consiste à associer une pièce externe à l'axe de rotation du disque du ralentisseur visqueux, cette pièce étant un galet de friction susceptible d'être mis en rotation sur un élément vertical lorsque le chariot est libéré et remonte de sa position de grillage vers une position de repos. Ce galet permet la rotation du disque du ralentisseur dans un environnement visqueux, afin d'assurer la fonction annoncée de ralentissement de la remontée du chariot porte-pain, et ceci de façon silencieuse.

Dans une configuration simplifiée de la présente invention, le ralentisseur utilisé est un ralentisseur à friction, composé d'au moins une pièce susceptible d'être mise en rotation sur l'élément vertical lorsque le chariot est libéré et remonte de sa position de grillage vers une position de repos, cette rotation s'effectuant par rapport à un élément fixe du boîtier du système ralentisseur, en présentant un coefficient de friction sur cet élément adapté au ralentissement recherché. Ce dispositif permet d'éviter l'utilisation de graisse ou de liquide visqueux. Un des modes de réalisation de cette dernière configuration consiste à disposer d'un anneau ainsi que d'une pièce à facettes, l'une des deux pièces étant solidaire de la pièce en rotation, tandis que l'autre est solidaire du boîtier, lesdites facettes étant en contact avec la surface interne de l'anneau et susceptibles de ralentir le mouvement de rotation de la pièce en appui sur l'élément vertical, par friction sur cet anneau lorsque le chariot est libéré et remonte de sa position de grillage vers une position de repos.

Avantageusement, l'élément vertical est la tige de guidage du chariot porte-pain, permettant ainsi de réduire le nombre de pièces nécessaires pour réaliser une telle fonction.

Dans une autre forme avantageuse de réalisation, la pièce externe du système ralentisseur, susceptible d'être mise en rotation, est recouverte d'une matière caoutchouteuse, afin d'assurer un roulement sans glissement de cette pièce sur la tige de guidage et/ou pour limiter le bruit.

Dans une autre forme de réalisation, la pièce externe du système ralentisseur, susceptible d'être mise en rotation, est entièrement constituée de matière caoutchouteuse.

Selon un autre mode de réalisation de la présente invention, le revêtement caoutchouteux présente un profil périphérique en forme de gorge adaptée à la forme de la tige de guidage. Cette configuration permet un meilleur couplage entre la tige et la pièce en rotation ainsi qu'un guidage plus fiable du ralentisseur lors des différents mouvements.

Dans une autre configuration de la présente invention, la pièce externe du système ralentisseur, susceptible d'être mise en rotation, présente une forme de pignon à dents et est susceptible d'être mise en rotation par engrènement sur une crémaillère verticale, lorsque le chariot est libéré et remonte de sa position de grillage vers une position de repos.

Dans cette dernière configuration, la crémaillère peut être moulée dans l'enveloppe extérieure du grille-pain dans un matériau thermoplastique. Avantageusement, dans une autre version de la présente invention, la crémaillère est la tige de guidage du chariot porte-pain.

Dans un mode de réalisation avantageux de la présente invention, le boîtier du ralentisseur comporte une extension formant un bras articulé sur l'extension du chariot porte-pain, ce bras étant orienté sensiblement obliquement par rapport à l'axe de remontée du chariot porte-pain. Une telle disposition du système ralentisseur permet de ne valider la fonction de ralentissement que lorsque le chariot est dans une phase ascendante. Lors de la descente du chariot, le bras, par son articulation, s'escamote et aucune force supplémentaire due au système ralentisseur n'est nécessaire pour abaisser le chariot.

D'autres avantages et caractéristiques de la présente invention ressortiront mieux à la lecture de la description, en référence aux dessins annexés, donnés à titre d'exemples non limitatifs, dans lesquels :
- la figure 1 est une vue en perspective du mécanisme de remontée ralentie monté sur le châssis du grille-pain, le chariot étant en position de repos,
- les figures 2a et 2b représentent le ralentisseur à graisse équipé du galet de friction, respectivement en vue de face et en vue selon la coupe A-A,
- la figure 3 représente un schéma simplifié du principe de fonctionnement du dispositif ralentisseur,
- la figure 4 est une variante de construction du galet associé au ralentisseur,
- les figures 5a, 5b, 6a et 6b représentent deux variantes de construction du ralentisseur à friction.
- la figure 7 représente une variante de construction du dispositif de ralentissement.

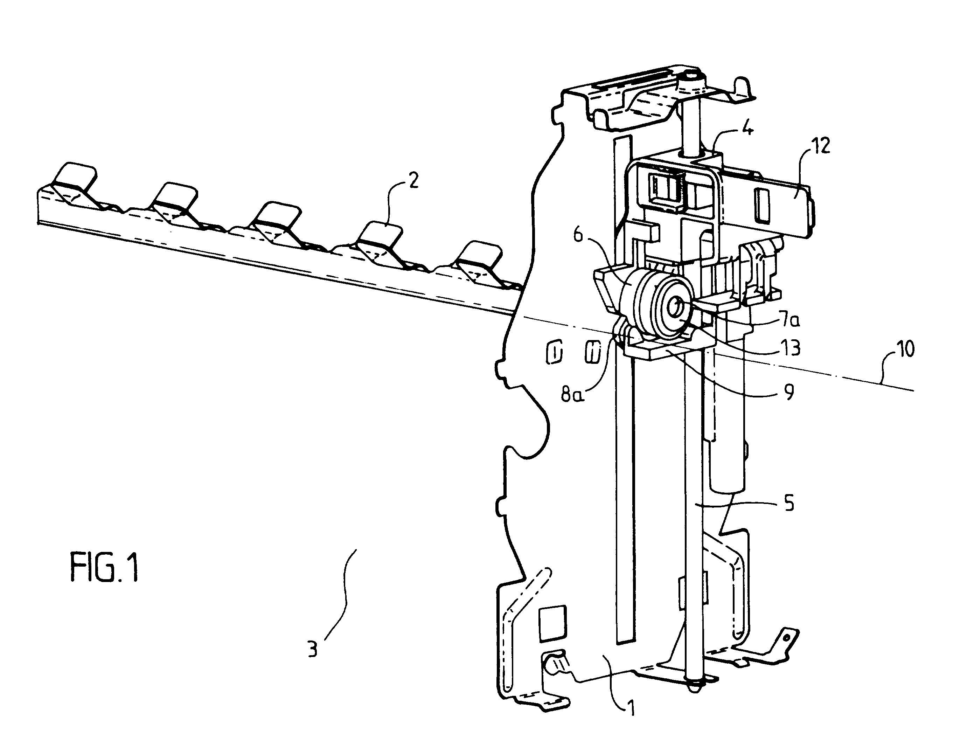

La figure 1 présente un mode de réalisation du mécanisme de ralentissement de la remontée du chariot porte-pain d'un grille-pain électrique, dans une vue en perspective où n'apparaissent que les éléments fonctionnels relatifs à la présente invention. Ainsi, agencé sur le châssis (1) d'un grille-pain possédant au moins une fente d'introduction du pain, un chariot porte-pain (2) peut se déplacer, à l'intérieur d'une chambre de cuisson (3) possédant des éléments chauffants agencés en son voisinage, entre une position de repos et une position basse de grillage, dans laquelle il peut être maintenu par un moyen de blocage, guidé à l'aide d'une pièce (4) solidaire dudit chariot qui coulisse sur une tige de guidage (5), hors de la chambre de cuisson. Un moyen de rappel du chariot, non représenté, est monté sur le chariot et sur le bâti.

Sur une extension (9) de la pièce de guidage (4) est disposé un bras (8a) orienté obliquement par rapport à la tige de guidage du chariot et articulé autour d'un axe (10) parallèle au chariot porte-pain, lui permettant d'être mobile en rotation autour de cet axe. Sur ce bras est fixé un ralentisseur à graisse (6) dont l'axe (7a) de son disque interne est lié à un galet (13) qui vient au contact de la tige de guidage (5). Dans une des formes de réalisation de l'invention, le galet est entraîné en rotation par friction sur l'élément vertical (5).

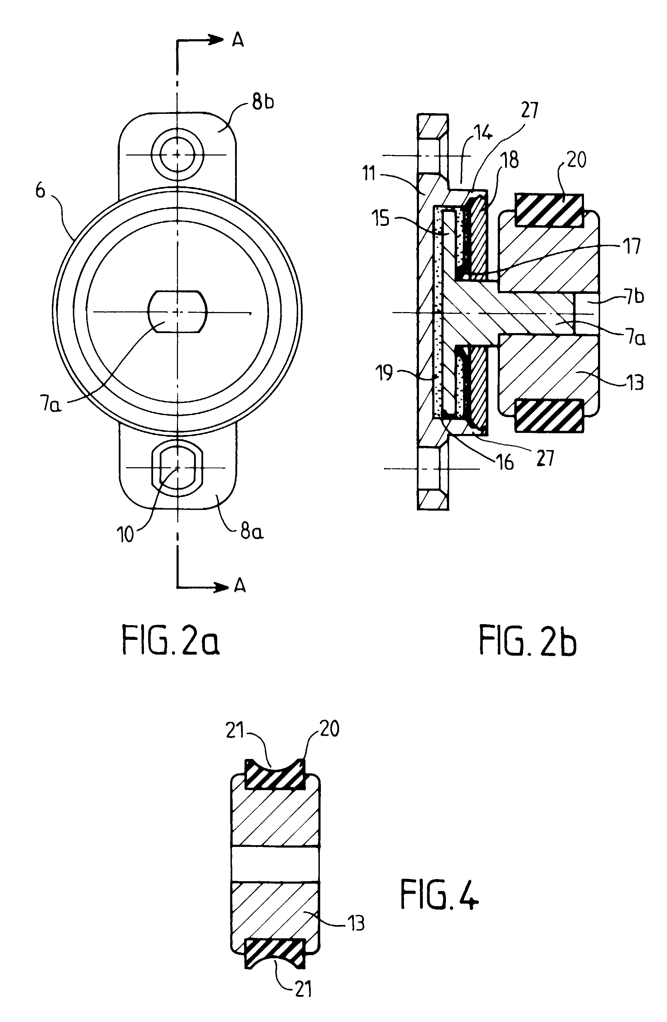

La figure 2a présente une vue de face du ralentisseur (6) utilisé. On retrouve les éléments déjà décrits que sont l'axe de rotation et axe de symétrie (7a), le bras (8a) et son axe d'articulation (10). Le bras (8b) constitue une butée permettant de limiter le mouvement de rotation du ralentisseur autour de l'axe (10). La figure 2b est une vue en coupe, selon le plan A-A indiqué figure 2a, de ce même ralentisseur. Dans cette représentation, le bras (8a) est une extension du boîtier (14) du ralentisseur (6). Celui-ci est donc constitué d'un axe (7a) équipé d'un disque (15) logé dans une chambre (16) du boîtier (14) ce dernier étant essentiellement constitué d'une face (11) solidaire du bras (8a) et prolongée par une zone annulaire (27), ainsi que d'un joint d'étanchéité (17) renforcé par un couvercle (18) venant en appui sur la zone annulaire (27) afin de délimiter la chambre (16). Cette chambre est remplie de graisse (19) ou substance visqueuse. L'axe (7a) débouche de cette chambre (16) par un orifice ménagé dans le couvercle (18). La rotation de cet axe (7a) permet d'entraîner le disque (15) en rotation dans la graisse. Dans la représentation de la figure 2b, l'axe (7a) ainsi que le disque (15) ne forment qu'une seule pièce.

Un galet (13) est fixé solidairement à l'axe (7a), de quelque manière que ce soit, de façon à ce qu'une rotation du galet (13) occasionne une rotation de l'axe (7a), donc du disque (15). Un des modes possibles de fixation des deux pièces est un ajustement de type mâle/femelle selon une section non circulaire, comme représenté figure 2a où la section de l'axe (7a) est de forme globalement rectangulaire et correspond à un évidement complémentaire (7b) ménagé dans le galet (13). La rotation du galet, par roulement sur la tige de guidage (5) du chariot porte-pain entraîne donc un frottement de type visqueux du disque (15) dans la graisse (19).

Avantageusement, le galet (13) est recouvert d'une bande caoutchouteuse (20) afin d'assurer un roulement sans glissement du galet (13) sur la tige de guidage (5) du chariot porte-pain. Dans une variante de ce dispositif, le galet (13) est entièrement constitué de matière caoutchouteuse, ce qui évite la bande de friction (20). Cette bande caoutchouteuse (20) peut constituer une bande d'amortissement du bruit occasionné par le dispositif, lors de l'utilisation d'un procédé d'entraînement par crémaillère, comme il est décrit plus loin dans la demande.

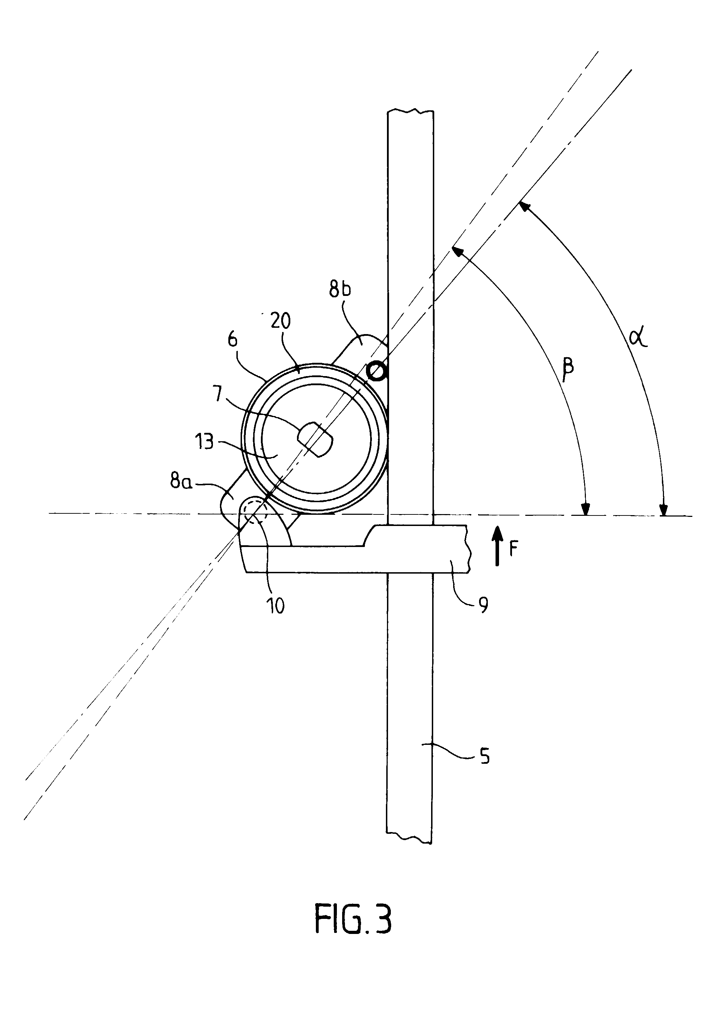

La figure 3 permet d'illustrer le principe de fonctionnement du système ralentisseur. Cette figure représente le ralentisseur (6) dans son fonctionnement de ralentissement lors de la remontée du chariot porte-pain.

A la fin d'un cycle de grillage de tranches de pain, sous l'action de la force F des moyens de rappel, le chariot porte-pain est entraîné de sa position basse vers le haut du grille-pain. L'énergie stockée dans le ressort de rappel est partiellement transmise au ralentisseur par l'intermédiaire du galet (13) recouvert d'élastomère. La résultante des forces s'exerçant sur ce galet, compte tenu du mouvement de remontée du chariot, de la position naturelle du bras (8a), ainsi que du coefficient de frottement relatif du galet (13) sur la colonne de guidage, provoque une légère rotation du bras (8a) dans le sens horaire, qui présente alors un angle d'inclinaison α par rapport à l'horizontale. Cette légère rotation provoque une pression du galet (13) sur la tige (5), de manière à assurer l'adhérence suffisante provoquant la rotation, dans le sens horaire, du galet (13) sur la colonne de guidage (5). Ceci entraîne la rotation du disque interne (15) du ralentisseur, libérant l'énergie transmise par frottement entre le disque (15) et le fluide visqueux (19) environnant. Ce frottement visqueux entraîne ainsi le ralentissement du mouvement de remontée du chariot porte-pain.

Cette même figure 3 permet de constater que ce dispositif n'est pas actif lors de la descente du chariot.

En effet, lors de la descente du chariot, par l'intermédiaire du levier (12) solidaire du chariot et actionné par l'utilisateur, l'obliquité du bras (8a) ainsi que la résultante des forces s'exerçant sur ce galet ont tendance à faire tourner ce bras autour de son axe de rotation (10), dans le sens anti-horaire. Ce bras présente alors un angle d'inclinaison β par rapport à l'horizontale, l'angle β étant supérieur à l'angle α. Ainsi, le galet s'échappe de la tige de guidage et ne fait que l'effleurer sous l'action de son propre poids, sans rotation, évitant par là même à l'utilisateur de fournir un effort autre que celui propre à allonger le ressort de rappel du chariot porte-pain.

Afin d'augmenter la surface de contact entre le galet et la colonne de guidage, il peut être prévu une géométrie particulière de l'élastomère recouvrant le galet, cette configuration permettant d'élargir le choix possible des différentes qualités d'élastomère, tout en assurant un guidage plus sûr du chariot porte-pain.

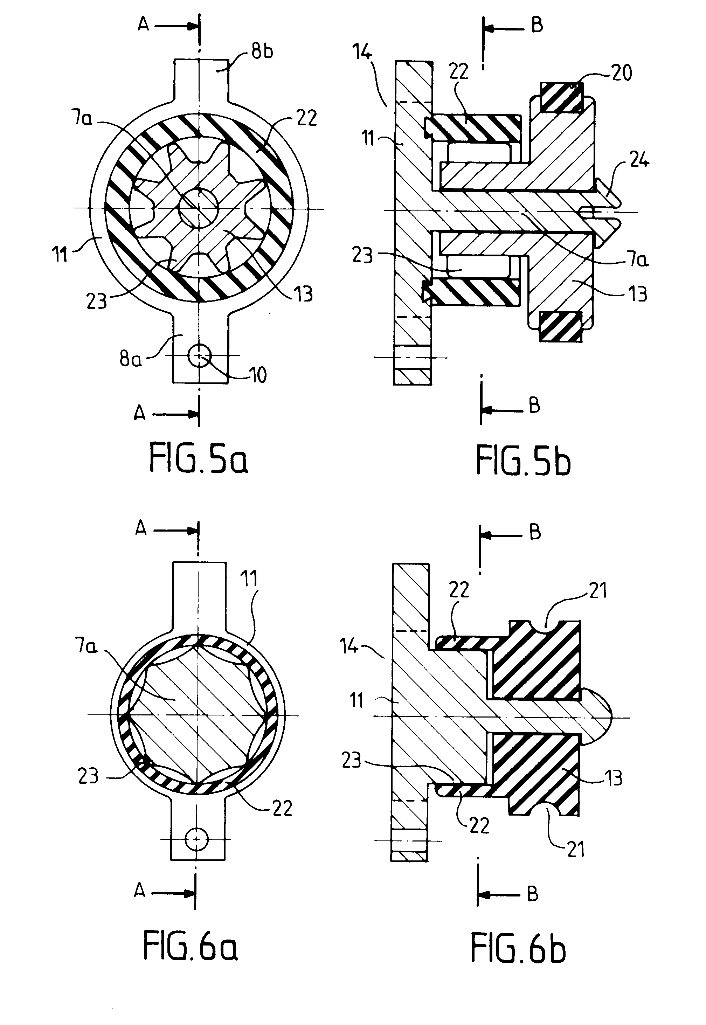

Ainsi, la figure 4 propose une vue en coupe selon le plan A-A de la figure 2a du galet (13) équipé d'une variante de la forme du revêtement caoutchouteux (20). Ce revêtement présente une gorge (21) pouvant venir en contact avec la tige de guidage (5) pour ainsi augmenter la surface de contact, ce qui rend le système de ralentissement plus fiable.

La caractéristique principale de cette première version du système de ralentissement de la remontée du chariot porte-pain est liée à la viscosité du fluide contenu dans le boîtier (14) du ralentisseur. Ce fluide étant emprisonné dans une enceinte hermétique, les miettes de pain, engendrées lors de l'utilisation répétée du grille-pain, ne peuvent venir perturber le fonctionnement de ce système.

Il est nécessaire, compte tenu de la force de rappel du chariot porte-pain ainsi que de la chaleur régnant au niveau de ce système, de choisir judicieusement la qualité du liquide visqueux dans lequel est plongé le disque (15) du ralentisseur, afin que la caractéristique de ralentissement soit optimale et reproductible temporellement, même si l'échauffement du dispositif est limité par le fait qu'il est situé hors de la chambre de grillage.

Il est ainsi possible d'utiliser des fluides de viscosité différente permettant, sur une gamme étendue, d'obtenir des ralentissements différents afin d'adapter ce système à tout type de grille-pain, compte tenu des précautions thermiques précédemment citées.

Par ailleurs, lorsque le chariot est libéré de sa position de grillage, le système ralentisseur n'est actif qu'après quelques millimètres de course du chariot, correspondant à l'inertie du dispositif, à la dynamique du procédé, ainsi qu'à la rotation du bras (8a). Cette course non ralentie est d'amplitude suffisante pour assurer le décollement du pain des grilles de maintien et pour couper l'alimentation électrique des moyens de chauffe.

Dans une autre forme de réalisation simplifiée de l'invention, le damper à graisse est remplacé par un système équivalent à friction. La figure 5a est une vue en coupe longitudinale selon le plan B-B de la figure 5b du ralentisseur à friction, alors que la figure 5b est une vue en coupe transversale selon le plan A-A de la figure 5a de ce même ralentisseur. Celui-ci comporte un boîtier (14) ainsi qu'un axe (7a) cylindrique, solidaire d'une face (11) du boîtier (14) du ralentisseur, dépourvu de graisse. Dans la représentation de la figure 5b, l'axe (7a) et la face (11) ne forment qu'un seul élément. Le galet (13) est monté avec un léger jeu sur l'axe (7a), de telle sorte qu'il puisse tourner librement autour de cet axe. L'axe (7a) présente une zone d'arrêt (24) à son extrémité, sous la forme, par exemple d'une butée. Par ailleurs, un anneau (22) en élastomère, caractérisé par un coefficient de frottement déterminé, est rendu solidaire de la pièce (11) du boîtier (14) du ralentisseur, par exemple, par surmoulage. Ainsi, le boîtier (14) est constitué par la pièce (11), l'anneau (22) et par le galet (13).

Par ailleurs, le galet (13) s'étend, par son fût, à l'intérieur de l'anneau (22) en présentant, de façon périphérique, des facettes (23) moulées, dont les dimensions sont telles qu'elles exercent une pression de contact déterminée sur la surface interne de l'anneau (22). Selon l'exemple représenté, le galet (13) est recouvert d'un revêtement caoutchouteux (20). Ainsi, lorsque ce revêtement (20) entre en friction avec la tige de guidage (5), lors de la remontée du chariot porte-pain, le galet (13) est entraîné en rotation autour de l'axe (7a), ses facettes (23) viennent alors frotter contre la surface interne de l'anneau (22), à l'intérieur du boîtier (14), créant ainsi le ralentissement de la remontée du chariot.

Dans un tel dispositif, ce sont la forme et la matière des deux pièces en mouvement relatif qui permettent, par friction de ces deux pièces, le ralentissement souhaité. Les figures 6a et 6b présentent, sur le même principe de ralentissement de la remontée du chariot, une autre forme de réalisation du ralentisseur à friction, selon les mêmes vues en coupe qu'aux figures 5a et 5b. Selon cette configuration simplifiée, le galet (13) est en élastomère et comporte l'anneau (22). L'axe (7a), relié à la pièce (11) du boîtier (14), comporte les facettes (23) de frottement. Le boîtier est toujours formé par la pièce (11), l'anneau (22) et le galet (13), mais par rapport aux figures 5a et 5b, ce ne sont pas les mêmes pièces qui sont mises en mouvement.

Le phénomène de frottement est, selon cette configuration, accentué, par la déformation du galet en élastomère. La forme des facettes (23) telle que présentée figure 5a ou 6a n'est pas limitative, et il est possible de présenter toute autre forme permettant d'obtenir différentes surfaces de contact avec l'anneau (22), afin d'adapter le dispositif au ralentissement recherché, sans sortir du cadre de la présente invention.

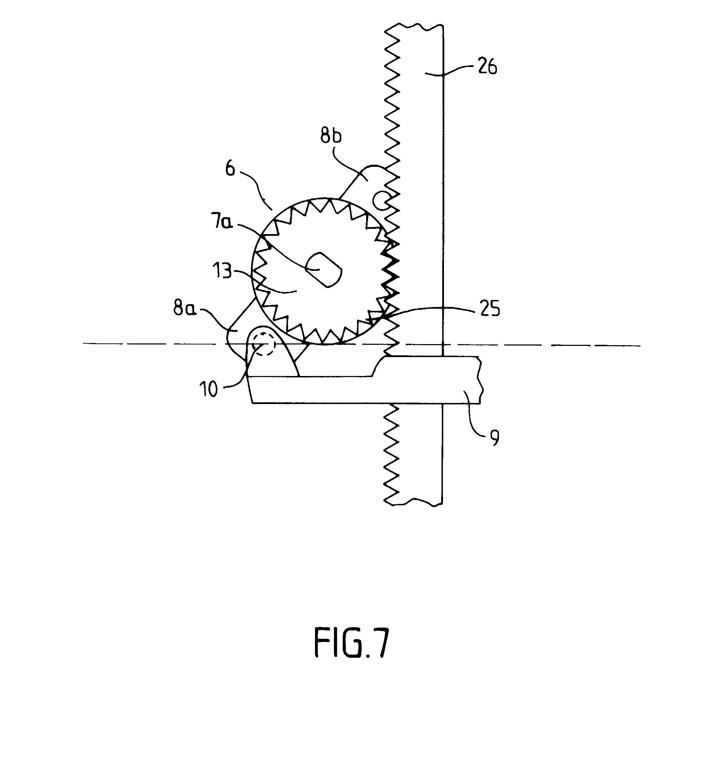

Dans un autre mode de réalisation de la présente invention, la pièce susceptible d'être mise en rotation lors de la remontée du chariot porte-pain, c'est à dire le galet (13), a une forme de pignon. Par suite, le grille-pain dispose d'un élément vertical présentant une forme de crémaillère adaptée aux dents du galet (13). La figure 7 montre un tel dispositif appliqué à un ralentisseur à graisse.

Sur cette figure est représenté le système ralentisseur (6) à graisse en fonctionnement, lors de la remontée du chariot porte-pain. La particularité de cette variante réside donc dans le galet (13) qui a la forme d'un pignon, obtenu par exemple par moulage. Afin de permettre la transmission du mouvement de la remontée du chariot en mouvement de rotation du galet (13), une crémaillère (26) adaptée, par son pas, à la forme dentelée (25) du galet (13) est disposée verticalement à l'intérieur du grille-pain. Il peut être prévu un revêtement en élastomère sur ce pignon, afin de limiter le bruit lié à l'engrènement de cet élément sur la crémaillère. Afin de permettre le décollement du pain, un amincissement de la crémaillère à sa base peut être effectué, afin de rendre inactif le dispositif de ralentissement sur les premiers centimètres de remontée du chariot.

Cette crémaillère (26) peut être moulée dans l'enveloppe extérieure du grille-pain, ou, avantageusement, elle peut être la tige de guidage du chariot porte pain.

Ainsi, la présente invention résout de manière économique la fonction de ralentissement de la remontée du chariot porte-pain à l'aide d'un élément standard, aux caractéristiques ajustées. Ceci permet de diminuer sensiblement le prix de revient d'un grille-pain équipé d'une telle fonction.

## Revendications

1. Grille-pain électrique, comportant un bâti pourvu d'un châssis (1), une fente d'introduction du pain, une chambre de cuisson (3), des éléments chauffants agencés au voisinage de la chambre de cuisson, un chariot porte pain (2) mobile, à l'intérieur de la chambre de cuisson, entre au moins une position de grillage et une position de repos, une tige de guidage (5) pour optimiser le déplacement du chariot, un moyen de blocage afin de positionner le chariot à un niveau inférieur correspondant à la position de grillage, un moyen de rappel du chariot monté sur le chariot et sur le bâti, un système susceptible de ralentir la remontée du chariot, caractérisé en ce que ce système est disposé sur une extension (4) du chariot porte pain, hors de la chambre de grillage et est constitué d'un ralentisseur (6) rotatif de type visqueux ou de type friction, activé lorsque le chariot est libéré et remonte de sa position de grillage vers une position de repos.

2. Grille-pain selon la revendication 1, caractérisé en ce que le ralentisseur (6) est constitué d'un boîtier (14) formé soit uniquement par des éléments solidaires d'une extension du chariot porte pain, soit en partie par lesdits éléments et par un élément susceptible d'être mis en rotation, le frottement de type visqueux ou de type friction se réalisant à l'intérieur du boîtier (14) par un élément (13) mis en rotation par rapport à un élément fixe solidaire du boîtier (14) du système ralentisseur (6) lorsque le chariot est libéré et remonte de sa position de grillage vers une position de repos.

3. Grille-pain selon l'une des revendications précédentes, caractérisé en ce que le ralentisseur (6) est de type visqueux, constitué d'un disque (15) d'axe de rotation (7a), comportant un galet de friction (13) situé à l'extérieur du boîtier (14), associé à l'axe de rotation (7a) du disque (15) du ralentisseur (6), ce galet (13) étant mis en rotation sur un élément vertical lorsque le chariot est libéré et remonte de sa position de grillage vers une position de repos.

4. Grille-pain selon la revendication 3, caractérisé en ce que le ralentisseur (6) comporte :
- un anneau (22)
- une pièce à facettes (23),
l'un des deux éléments (22, 23) étant solidaire de l'élément (13), tandis que l'autre est solidaire du boîtier (14), lesdites facettes de la pièce (23) étant en contact avec la surface interne de l'anneau (22) et susceptibles de ralentir le mouvement de rotation de l'élément (13) par friction sur cet anneau (22) lorsque le chariot est libéré et remonte de sa position de grillage vers une position de repos.

5. Grille-pain selon l'une des revendications précédentes, caractérisé en ce que l'élément vertical est la tige de guidage (5) du chariot porte-pain.

6. Grille-pain selon l'une des revendications précédentes, caractérisé en ce que l'élément (13), susceptible d'être mis en rotation, est recouvert d'une matière caoutchouteuse (20).

7. Grille-pain selon l'une des revendications précédentes, caractérisé en ce que l'élément (13) est entièrement constituée de matière caoutchouteuse.

8. Grille-pain selon l'une des revendications précédentes, caractérisé en ce que l'élément (13) présente un profil périphérique en forme de gorge adaptée à la forme de la tige de guidage.

9. Grille-pain selon l'une des revendications 1 à 7, caractérisé en ce que l'élément (13) présente une forme de pignon à dents (25) et est susceptible d'être mis en rotation par engrènement sur une crémaillère (26) verticale, lorsque le chariot est libéré et remonte de sa position de grillage vers une position de repos.

10. Grille-pain selon la revendication précédente, caractérisé en ce que la crémaillère (26) est moulée dans l'enveloppe extérieure du grille-pain dans un matériau thermoplastique.

11. Grille-pain selon la revendication 9 ou 10, caractérisé en ce que la crémaillère (26) est la tige de guidage du chariot porte-pain.

12. Grille-pain selon l'une des revendications précédentes, caractérisé en ce que le boîtier (14) du ralentisseur comporte une extension formant un bras (8a) articulé sur l'extension (4) du chariot porte-pain, ledit bras étant orienté sensiblement obliquement par rapport à l'axe de remontée du chariot (2).

13. Grille-pain caractérisé en ce qu'il comprend un système de remontée ralentie du chariot porte-pain (2) conforme à l'une des revendications 1 à 12.
